# EUROPEAN PATENT APPLICATION

(11) **EP 1 696 373 A1**
(43) Date of publication of application: **30.08.2006**
(21) Application number: 05100731.8
(22) Date of filing: 02.02.2005
(51) Int. Cl.: G06Q 10/00

(54) **Method and system for dynamic calendar entry adjustment based on daylight savings time changes**

(71) Applicant: Research In Motion Limited, Waterloo, Ontario N2L 3W8 (CA)
(72) Inventor: Cormier, Jean-Philippe, K1R 6N5, Ottawa, Ontario (CA); Zhang, Derek, K2M 2R9, Kanata, Ontario (CA)
(74) Representative: Rickard, David John

(57) **Abstract**

A method for dynamic time based entry adjustment based on daylight savings time changes in a mobile device comprising the steps of: translating at either the mobile device or a server a time based event having an event time and one or more event recipients into a universal time, the translating step removing any daylight savings times from the event time and performing a time zone adjustment; sending from the server to a device for each of the one or more event recipients the time based event with the universal time; and translating at the recipient device the time based event with universal time to a time based event with a local time; and adding the time based event with the local time to an application on the recipient device.

## Description

### FIELD OF THE APPLICATION

The present application relates to the dynamic adjustment of calendar or other time-based entries and, in particular, to the dynamic adjustment of the calendar or time-based entry into a mobile station.

### BACKGROUND

The switch from summertime to Daylight Savings Time and vice versa does not occur on the same weekend around the world. For example, parts of Europe switch to Daylight Savings Time one week earlier than in North America.

In mobile devices that include the automatic scheduling of meetings or other calendar events, the variations in the start of Daylight Savings Time can create calendar or time-based entries that are off by one hour. For example, if a person in North America wishes to set a meeting for 10:00 a.m. local time with an individual in the UK, the North American individual could set the calendar entry and further send a request to the European individual's mobile station to set a meeting for the same time. However, if the software behind the meeting scheduler does not take into account the change in Daylight Savings Time, then only a time zone change will occur and this will result in a one-hour differential between times for the meetings.

Further, in reoccurring events, such as a weekly meeting, a calendar will locally take into account the change in Daylight Savings Time. However, if the person having responsibility for the meeting is in North America and if some of the participants are in Europe, the European participants will also have a problem during the one-week transition between Daylight Savings Time in Europe and Daylight Savings Time in North America.

Other jurisdictions in the world also have Daylight Savings Time, and the switch to these Daylight Savings Time does not necessarily correspond with either Europe or North America. These transition periods therefore create issues with relation to synchronization of meetings between various jurisdictions.

### SUMMARY

The present method and apparatus overcome the deficiencies of the prior art by ensuring that a translation occurs when scheduling times to take into account the changes in Daylight Savings Time. This occurs by taking each calendar event, and preferably from a mobile station converting the calendar event to a universal or ultimate time (UTC). This event in ultimate time is sent to a server. On the server, the calendar event is stored.

A server will receive events from both mobile stations and from other sources that may not convert the time to a universal time. Thus the server needs to check whether the event is in universal time and if not convert it to a universal or "ultimate" time.

The above ultimate time is a base time for non-Daylight Savings Time. In other words, if the event was created in the summer in a location with Daylight Savings Time, beyond removing time zone differences, the server or mobile station further removes one hour to remove the Daylight Savings Time if the creator of the event was in a Daylight Savings Time location.

The server then sends the event with the universal time to all the recipients of the event. These recipients receive the event and translate the event to local time. The local time will include whether the local device is within Daylight Savings Time and will add this time shift to the event if that is the case. The event is then inserted into a calendar. In this way, a user in one jurisdiction can set a meeting with various individuals in other areas and be ensured that everybody is ready for the meeting at the same time.

The present system and method further facilitates the roaming of a device by ensuring that if a user moves from one jurisdiction in which Daylight Savings Time occurs into another jurisdiction in which there is no Daylight Savings Time, that the calendar will automatically adjust to ensure that the calendar events such as meetings are synchronized for the proper local time in the area that the user is currently roaming in.

### BRIEF DESCRIPTION OF THE DRAWINGS

The present system and method will be better understood with reference to the drawings in which:
Figure 1 is a flow chart illustrating an exemplary system in which a mobile station interacts with a server in order to schedule calendar events in a universal time;
Figure 2 is a flow diagram showing the steps a server takes in order to send a message in universal time to a mobile station;
Figure 3 shows a timeline in which a first line corresponds with the Daylight Savings Time in North America and a second line corresponds with Daylight Savings Time in Europe; and
Figure 4 shows an exemplary mobile station on which the present system and method can be implemented.

### DETAILED DESCRIPTION OF THE DRAWINGS

In order to overcome the deficiencies of the prior art, whenever a new calendar entry is sent to a calendar application, the application must first check to see if the new incoming calendar actually was created in Daylight Savings Time or not. The application then checks if its local clock is configured for Daylight Savings Time. If the application determines that there is a difference between the creation of the event and the local setting, it translates the new calendar entry into its local calendar by one hour depending on a specific location mapping.

This solution requires the device to have mapping regions in order to determine if the meeting was created in Daylight Savings Time or not. The application would take the calendar and creation date and look at the date and time zone of this entry. The time zone would give the application an idea of the region to use and, if necessary, the application could change the time zone from summertime to Daylight Savings Time.

Once the application has made the necessary change to the calendar entry, it will remain in the correct slot permanently and not require any further adjustments.

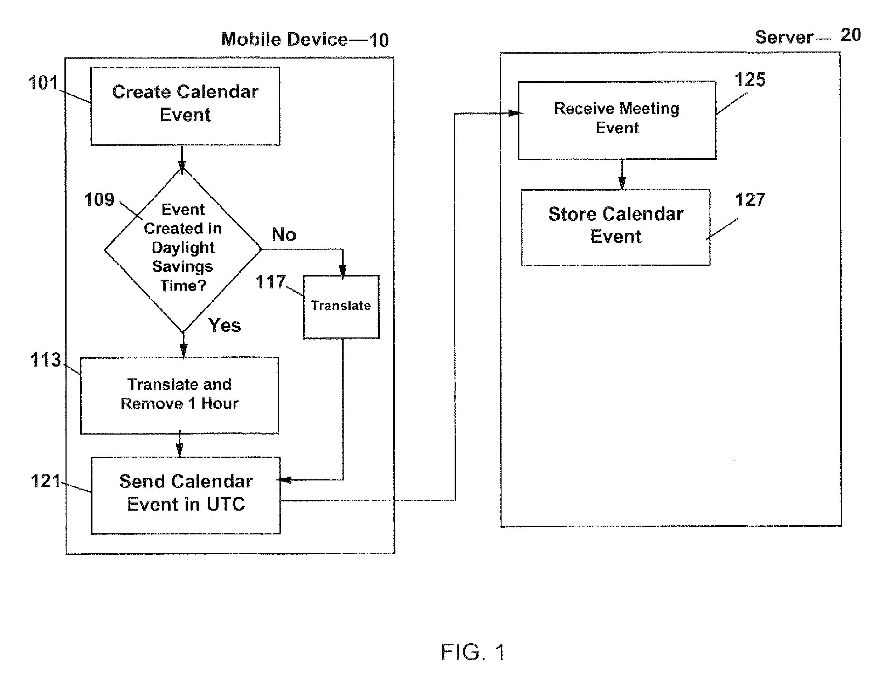

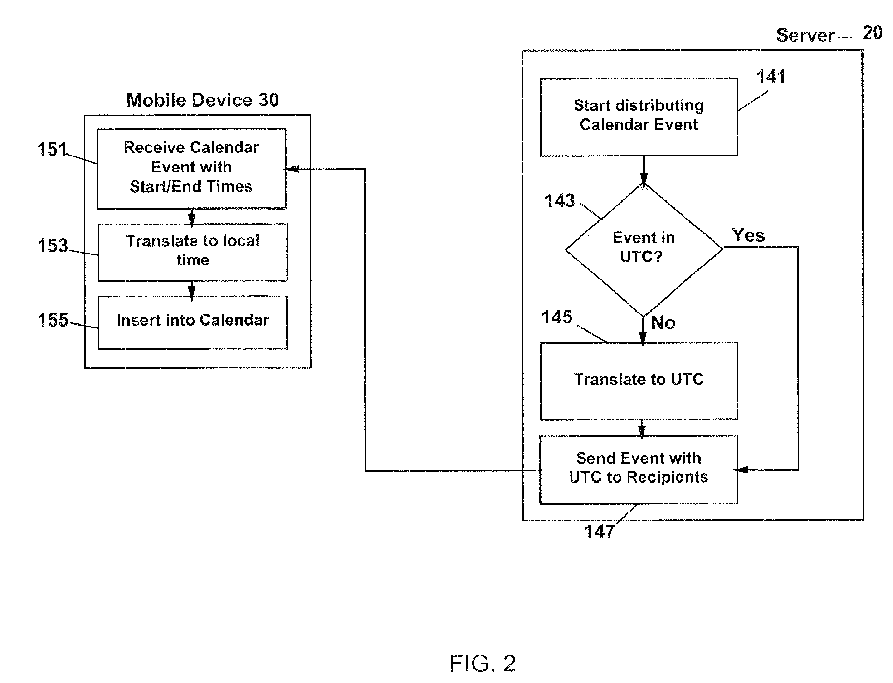

Reference is now made to Figure 1. Figure 1 illustrates a proposed solution to the prior art problem by providing a mobile device 10 that converts a calendar event into a universal time prior to sending the event to a server for storage. Mobile devices in each jurisdiction can then place the calendar event at the correct time zone for that local jurisdiction, as described with reference to Figure 2.

A mobile device 10 first is used to create a calendar event 101. The mobile device next checks at step 109 whether the event was created in Daylight Savings Time. As will be appreciated by those skilled in the art, step 109 could check whether the event was created in non-Daylight Savings Time and translations as described below could be done in the opposite way. However, stripping Daylight Savings Time is preferable since not all areas use Daylight Savings Time. The check in step 109 is based on the local area of mobile device 10.

If in step 109 it is determined that the event was created in a location with Daylight Savings Time, mobile device 10 next proceeds to step 113 in which the event is translated and one hour is removed. Translation means that the event is brought to a universal time zone such as Greenwich Mean Time or any other pre-determined time zone. The removal of one hour removes the Daylight Savings Time hours and brings the event to a winter universal time.

The mobile device next proceeds to step 121 in which the event with the universal time is sent to a server 20.

As will be appreciated by those skilled in the art, not all areas have Daylight Savings Time. For example, many parts of Asia, or most of the province of Saskatchewan in Canada do not use Daylight Savings Time. In this case, it is determined in step 109 that the event was not created in Daylight Savings time and the system proceeds to step 117 as described below.

If it is determined in step 109 the event was not created in the Daylight Savings Time, the only thing mobile device 10 needs to do is to translate to a universal time, which is done in step 117. From step 117 the mobile device proceeds to step 121 in which the event is sent to the server.

Server 20 receives the event at step 125 and stores the event at step 127.

Reference is now made to Figure 2. Figure 2 shows as server that can be used in conjunction with the mobile station of Figure 1, or can be used in a system in which the mobile station sends events in a local time without stripping any Daylight Savings Time information.

Once a server 20 has stored a message in step 127 it is required to distribute the event to all of the event recipients. Thus in step 141 server 20 starts to distribute the calendar event.

Server 20 next proceeds to step 143 in which it checks whether the event is in ultimate time. If not, server 20 provides a time translation in step 143 in the manner described above with reference to steps 109, 117 and 113. Specifically, server 20 checks to see the time zone of the originator of the message and shifts the time zone to a universal time zone. Further, server 20 checks whether originator of the event is in Daylight Savings Time, and if so, the Daylight Savings time is stripped from the event by shifting the event time by 1 hour. The event is then in an ultimate time.

If the event was in ultimate time originally or if a translation is done at step 145, the server next proceeds to step 147 in which the event is sent in ultimate time to the event recipients.

The exemplary drawing of Figure 2 illustrates only one recipient. Further, the original sender of the message will also be a recipient. Other recipients are also possible but for simplicity in the drawings are not shown. Each recipient may or may not be in a different time zone or a different jurisdiction than originator of the event. As used herein, jurisdiction will mean various locations which have different time zone rules such as European zone, a Northern zone such as Canada and the United States, and a Southern zone which includes various parts of Australia, among others.

When mobile station 30 receives an event message at step 151, the mobile station proceeds to step 153 in which the event is translated to local time. Translation in this case means the addition of time zone differences from universal time based on the current location of mobile station 30. Further, if the calendar event will occur during Daylight Savings Time for the location of calendar application 30, then step 153 also adds one hour to ensure the meeting is set at a proper local time, as long as that location uses Daylight Savings Time.

Mobile station 30 next proceeds to step 155 in which the event is inserted into the calendar.

As will be appreciated by those skilled in the art, a calendar event as described above could be replaced by any other event which has scheduling and time considerations that may be affected by various time zone changes. The present application is not meant to be limited to calendar applications and could include notification of tasks, local email sending times, or any other feature that is time-dependent.

As illustrated in Figure 1, a mobile station originator of the message does not set its meeting in its calendar directly from step 121 but rather sends the calendar event to a server 20 and then receives the calendar event back from the server as illustrated in Figure 2. This ensures that there is synchronization even on the application to set up the message.

As will be appreciated by those skilled in the art, calendar events could originate from various locations, including mobile devices, desktop computers, among others. Translation could therefore occur at either the mobile device 10 if the mobile device is the originator of the event, or at server 20 if the originator did not convert the message. A server 20 will have various means for determining whether a conversion has occurred, including header information or other means known to those skilled in the art.

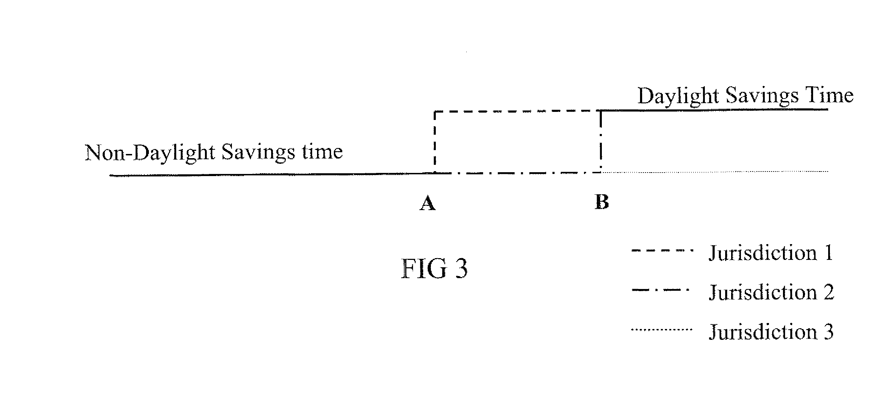

Reference is now made to Figure 3. Figure 3 shows a timeline of two jurisdictions in which the Daylight Savings Time change is made at different points. In a first jurisdiction, the Daylight Savings Time event occurs at point A whereas in a second jurisdiction the Daylight Savings Time occurs at a point B. The problem in the prior art is that if an event was being scheduled from jurisdiction 1 in which one of the event participants was in jurisdiction 2, a one-hour discrepancy in the time of the event would exist between points A and B. In the case of North America and Europe, A and B are one week apart and thus for the events in that one week, there would be a discrepancy in the meetings.

As further seen in Figure 3, a third jurisdiction (Jurisdiction 3) does not have Daylight Savings time at all. Jurisdiction 3 therefore requires that events from Jurisdiction 1 or 2 be stripped of the additional hour for Daylight Savings Time in the summer.

According to the method and system of the present application, by bringing a calendar event to a universal time which strips Daylight Savings Time hours and puts everything into non-Daylight Savings time hours, and then letting each individual device add Daylight Savings Time hours if required, the present system and method overcomes the prior art by ensuring that a scheduled event occurs at a universal time and no one hour discrepancy exists.

Further, if a device travels from a jurisdiction which is in Daylight Savings Time into a jurisdiction in which Daylight Savings Time has not yet occurred, for example by traveling from Europe to North America, the calendar event is stored in a universal time. Thereafter, when the mobile station is informed that a new time zone exists, a check can be performed at the mobile station to determine whether or not the new time zone is also in Daylight Savings Time or not and to adjust the time value of the event accordingly. Thus, the present system and method also provides for roaming of a mobile station and the rescheduling of meetings to local times which does not involve the one hour discrepancy that would be present ordinarily in the prior art.

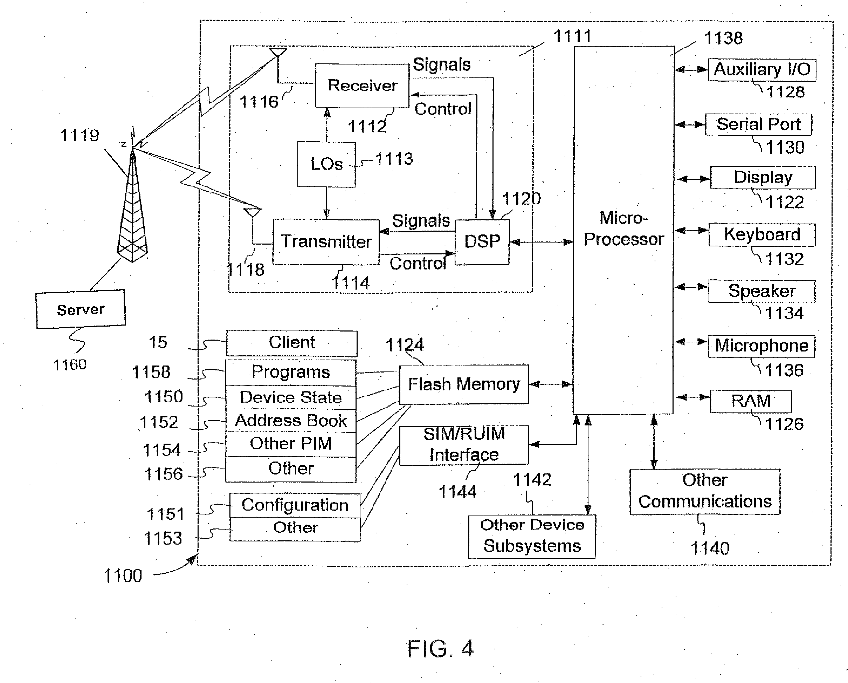

A typical mobile station on which the present method and system can be implemented is illustrated in Figure 4

Reference is now made to Figure 4. Figure 4 is a block diagram illustrating a host mobile station including preferred embodiments of the techniques of the present application. Mobile station 1100 is preferably a two-way wireless communication device having at least voice and data communication capabilities. Mobile station 1100 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device 1100 is enabled for two-way communication, it will incorporate a communication subsystem 1111, including both a receiver 1112 and a transmitter 1114, as well as associated components such as one or more, preferably embedded or internal, antenna elements 1116 and 1118, local oscillators (LOs) 1113, and a processing module such as a digital signal processor (DSP) 1120. As will be apparent to those skilled in the field of communications, the particular design of the communication subsystem 1111 will be dependent upon the communication network in which the device is intended to operate. For example, mobile station 1100 may include a communication subsystem 1111 designed to operate within the Mobitex™ mobile communication system, the DataTAC™ mobile communication system, GPRS network, UMTS network, EDGE network or CDMA network.

Network access requirements will also vary depending upon the type of network 1119. For example, in the Mobitex and DataTAC networks, mobile station 1100 is registered on the network using a unique identification number associated with each mobile station. In UMTS and GPRS networks, and in some CDMA networks, however, network access is associated with a subscriber or user of mobile station 1100. A GPRS mobile station therefore requires a subscriber identity module (SIM) card in order to operate on a GPRS network, and a RUIM in order to operate on some CDMA networks. Without a valid SIM/RUIM card, a GPRS/UMTS/CDMA mobile station may not be fully functional. Local or non-network communication functions, as well as legally required functions (if any) such as emergency calling, may be available, but mobile station 1100 will be unable to carry out any other functions involving communications over the network 1100. The SIM/RUIM interface 1144 is normally similar to a card-slot into which a SIM/RUIM card can be inserted and ejected like a diskette or PCMCIA card. The SIM/RUIM card can have approximately 64K of memory and hold many key configuration 1151, and other information 1153 such as identification, and subscriber related information.

When required network registration or activation procedures have been completed, mobile station 1100 may send and receive communication signals over the network 1119. Signals received by antenna 1116 through communication network 1119 are input to receiver 1112, which may perform such common receiver functions as signal amplification, frequency down conversion, filtering, channel selection and the like, and in the example system shown in Figure 3, analog to digital (A/D) conversion. A/D conversion of a received signal allows more complex communication functions such as demodulation and decoding to be performed in the DSP 1120. In a similar manner, signals to be transmitted are processed, including modulation and encoding for example, by DSP 1120 and input to transmitter 1114 for digital to analog conversion, frequency up conversion, filtering, amplification and transmission over the communication network 1119 via antenna 1118. DSP 1120 not only processes communication signals, but also provides for receiver and transmitter control. For example, the gains applied to communication signals in receiver 1112 and transmitter 1114 may be adaptively controlled through automatic gain control algorithms implemented in DSP 1120.

Network 1119 may further communicate with multiple systems, including a server 1160 and other elements (not shown). For example, network 1119 may communicate with both an enterprise system and a web client system in order to accommodate various clients with various service levels.

Mobile station 1100 preferably includes a microprocessor 1138 which controls the overall operation of the device. Communication functions, including at least data and voice communications, are performed through communication subsystem 1111. Microprocessor 1138 also interacts with further device subsystems such as the display 1122, flash memory 1124, random access memory (RAM) 1126, auxiliary input/output (I/O) subsystems 1128, serial port 1130, keyboard 1132, speaker 1134, microphone 1136, a short-range communications subsystem 1140 and any other device subsystems generally designated as 1142.

Some of the subsystems shown in Figure 4 perform communication-related functions, whereas other subsystems may provide "resident" or on-device functions. Notably, some subsystems, such as keyboard 1132 and display 1122, for example, may be used for both communication-related functions, such as entering a text message for transmission over a communication network, and device-resident functions such as a calculator or task list.

Operating system software used by the microprocessor 1138 is preferably stored in a persistent store such as flash memory 1124, which may instead be a read-only memory (ROM) or similar storage element (not shown). Those skilled in the art will appreciate that the operating system, specific device applications, or parts thereof, may be temporarily loaded into a volatile memory such as RAM 1126. Received communication signals may also be stored in RAM 1126. Further, a unique identifier is also preferably stored in read-only memory.

As shown, flash memory 1124 can be segregated into different areas for both computer programs 1158 and program data storage 1150, 1152, 1154 and 1156. These different storage types indicate that each program can allocate a portion of flash memory 1124 for their own data storage requirements. Microprocessor 1138, in addition to its operating system functions, preferably enables execution of software applications on the mobile station. A predetermined set of applications that control basic operations, including at least data and voice communication applications for example, will normally be installed on mobile station 1100 during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 1119. In a preferred embodiment, the PIM data items are seamlessly integrated, synchronized and updated, via the wireless network 1119, with the mobile station user's corresponding data items stored or associated with a host computer system. Further applications may also be loaded onto the mobile station 1100 through the network 1119, an auxiliary I/O subsystem 1128, serial port 1130, short-range communications subsystem 1140 or any other suitable subsystem 1142, and installed by a user in the RAM 1126 or preferably a non-volatile store (not shown) for execution by the microprocessor 1138. Such flexibility in application installation increases the functionality of the device and may provide enhanced on-device functions, communication-related functions, or both. For example, secure communication applications may enable electronic commerce functions and other such financial transactions to be performed using the mobile station 1100. These applications will however, according to the above, in many cases need to be approved by a carrier.

In a data communication mode, a received signal such as a text message or web page download will be processed by the communication subsystem 1111 and input to the microprocessor 1138, which preferably further processes the received signal for output to the display 1122, or alternatively to an auxiliary I/O device 1128. A user of mobile station 1100 may also compose data items such as email messages for example, using the keyboard 1132, which is preferably a complete alphanumeric keyboard or telephone-type keypad, in conjunction with the display 1122 and possibly an auxiliary I/O device 1128. Such composed items may then be transmitted over a communication network through the communication subsystem 1111.

For voice communications, overall operation of mobile station 1100 is similar, except that received signals would preferably be output to a speaker 1134 and signals for transmission would be generated by a microphone 1136. Alternative voice or audio I/O subsystems, such as a voice message recording subsystem, may also be implemented on mobile station 1100. Although voice or audio signal output is preferably accomplished primarily through the speaker 1134, display 1122 may also be used to provide an indication of the identity of a calling party, the duration of a voice call, or other voice call related information for example.

Serial port 1130 in Figure 4 would normally be implemented in a personal digital assistant (PDA)-type mobile station for which synchronization with a user's desktop computer (not shown) may be desirable. Such a port 1130 would enable a user to set preferences through an external device or software application and would extend the capabilities of mobile station 1100 by providing for information or software downloads to mobile station 1100 other than through a wireless communication network. The alternate download path may for example be used to load an encryption key onto the device through a direct and thus reliable and trusted connection to thereby enable secure device communication.

Other communications subsystems 1140, such as a short-range communications subsystem, is a further optional component which may provide for communication between mobile station 1100 and different systems or devices, which need not necessarily be similar devices. For example, the subsystem 1140 may include an infrared device and associated circuits and components or a Bluetooth™ communication module to provide for communication with similarly enabled systems and devices.

The exemplary mobile station of Figure 4 is meant to be illustrative and other devices with more or fewer features than the above could equally be used for the present method and apparatus.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for dynamic time based entry adjustment based on daylight savings time changes in a mobile device comprising the steps of:
translating at either the mobile device or a server a time based event having an event time and one or more event recipients into a universal time, the translating step removing any daylight savings time from the event time and performing a time zone adjustment;
sending from the server to a device for each of said one or more event recipients the time based event with the universal time; and
translating at the recipient device the time based event with universal time to a time based event with a local time; and
adding the time based event with the local time to an application on the recipient device.

2. The method of claim 1, wherein the time based event is a calendar event and the application is a calendar application.

3. The method of claim 1 or 2, wherein the translating at the application step includes adding daylight savings time if the application is in a location with daylight savings time and the event time occurs during the daylight savings time at the location.

4. The method of any of claims 1 to 3, wherein the translating step, if at the server, checks whether the time based event is already in universal time, and if so, does not change the time on the time based event.

5. The method of any of claims 1 to 4, further comprising the steps of:
checking whether the mobile device has moved into a different time zone since the adding step and, if yes, performing said translating at the application and adding steps based on the different time zone.

6. The method of claim 5, wherein the time based event is stored at the mobile device in universal time.

7. The method of any of claims 1 to 6, wherein the translating at the server step removes daylight savings time from the event time only if the original time based event is scheduled to occur in daylight savings time in the location of the event originator.

8. A mobile device with for dynamic time based entry adjustment based on daylight savings time changes **characterized by**:
means for receiving from the server a time based event with a universal time;
means for converting the time based event with universal time to a time based event with a local time, said conversion means arranged to perform a time zone adjustment to a local time zone and add daylight savings time if the time based event occurs in daylight savings time at the location of the mobile device; and
means for adding the time based event with the local time to an application on the recipient device.

9. The mobile device of claim 8, further including:
means for creating a new time based event having an event time and one or more event recipients;
means for translating the new time based event into a universal time, the translating means removing any daylight savings time from the event time and arranged to perform a time zone adjustment; and
means for sending to the server the time based event with the universal time.

10. The mobile device of claim 8 or 9, wherein the time based event is a calendar event and the application is a calendar application.

11. The mobile device of any of claims 8 to 10, further comprising means for checking whether the mobile device has moved into a different time zone since the means for adding has added the time based event with the local time to an application on the recipient device.

12. The mobile device of claim 11, wherein the time based event is stored at the mobile device in universal time.

13. The mobile device of any of claims 8 to 12, wherein the means for translating is arranged to remove daylight savings time from the event time only if the original time based event is scheduled to occur in daylight savings time in the location of the event originator.

14. A server for enabling dynamic time based entry adjustment based on daylight savings time changes in a mobile device comprising:
means for translating a time based event having an event time and one or more event recipients into a universal time, the translating means being arranged to remove any daylight savings time from the event time and to perform a time zone adjustment; and
means for sending to a device for each of said one or more event recipients the time based event with the universal time.

15. A wireless communications system including at least one mobile device according to any of claims 8 to 13 and/or a server according to claim 14.

16. A machine readable medium comprising program code means which when executed perform the method of any of claims 1 to 7 in the mobile device of any of claims 8 to 13.
